# EUROPEAN PATENT SPECIFICATION

(11) **EP 3 373 515 B1**
(45) Date of publication and mention of the grant of the patent: **01.01.2020**
(21) Application number: 16861288.5
(22) Date of filing: 29.06.2016
(51) Int. Cl.: H04L 12/24, H04W 92/04, H04W 24/02

(54) **METHOD OF LAUNCHING MICROWAVE COMMUNICATIONS BASE STATION AND MICROWAVE COMMUNICATIONS SYSTEM**
VERFAHREN ZUM STARTEN EINER MIKROWELLENKOMMUNIKATIONSBASISSTATION UND MIKROWELLENKOMMUNIKATIONSSYSTEM
PROCÉDÉ DE LANCEMENT D'UNE STATION DE BASE DE COMMUNICATION HYPERFRÉQUENCE ET SYSTÈME DE COMMUNICATION HYPERFRÉQUENCE

(30) Priority: 03.11.2015 CN 201510738027
(43) Date of publication of application: 12.09.2018
(73) Proprietor: ZTE Corporation, Shenzhen, Guangdong 518057 (CN)
(72) Inventor: LIU, Xuan, Shenzhen Guangdong 518057 (CN); LIU, Tao, Shenzhen Guangdong 518057 (CN)
(74) Representative: Ligi, Stefano
(86) International application number: PCT/CN2016/087574
(87) International publication number: WO 2017/076018

(56) References cited:
- WO-A2-2013/138493
- CN-A- 101 437 327
- CN-A- 101 651 987
- CN-A- 102 118 760
- CN-A- 102 355 680
- US-A1- 2003 105 742
- US-A1- 2013 237 230
- "Broadband Radio Access Networks (BRAN); Very high capacity density BWA networks; Protocols", ETSI DRAFT; TR_101589V010 - FIRST DRAFT_R1, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.1.0, 7 June 2012 (2012-06-07), pages 1-36, XP014071072, [retrieved on 2012-06-07]

## Description

### TECHNICAL FIELD

The disclosure relates to the field of communications, and particularly to a microwave communication station activation method and a microwave communication system.

### BACKGROUND

At present, station activation of microwave communication equipment requires human intervention. For completing station activation of microwave communication equipment of a station, a station activation processing flow includes that: a related person in charge is required to go to the station to complete work of antenna regulation configuration information transmission and the like of the microwave communication equipment of the station; and after antenna regulation and configuration information transmission of the microwave communication equipment of the station are completed, antenna regulation and configuration information transmission of a next-hop microwave station are continued to be completed for successful communication with the previous-hop microwave station. In a near-end-to-far-end manner, antenna regulation and configuration transmission are performed at each station to finally complete station activation work of the whole network.

Such a station activation manner in a related technology requires human intervention during antenna angle regulation and configuration transmission and is not so flexible. In addition, under influence of a microwave application scenario and the like, distances between the microwave stations are long and parts therebetween are untrodden, the person in charge runs between the stations for station activation to occupy a large amount of time and resources, which causes low station activation efficiency. Moreover, such a station activation manner in the related technology has the problem of high cost.

Document "Broadband Radio Access Network (BRAN); Very high capacity density BWA networks; Protocols", published as ETSI draft on June 7, 2012, discloses the specific protocols for a system providing a throughput of 1 Gbit/s/km². Such systems include features as self-backhauling in both licensed and un-licensed bands, cognitive-radio based self-organization, etc.

### SUMMARY

The below is a summary about a subject described in the disclosure in detail. The summary is not intended to limit the scope of protection of the claims.

Embodiments of the disclosure provide a station activation method for microwave communication equipment and a microwave communication system, which may improve station activation efficiency of the microwave communication equipment and reduce station activation cost.

The features of the method and device according to the present disclosure are defined in the independent claims, and the preferable features according to the present invention are defined in the dependent claims.

The embodiments of the disclosure provide a station activation method for microwave communication equipment, according to claim 1.

In an optional embodiment of the disclosure, the scanning function may include an automatic frequency sweeping function and an automatic antenna regulation function.

In an optional embodiment of the disclosure, the operation that said certain piece of station microwave communication equipment on the downstream scans the previous-hop station microwave communication equipment may include that:
the station microwave communication equipment scans frequency information of the previous-hop station microwave communication equipment through the automatic frequency sweeping function, configures frequency information of the station microwave communication equipment to be consistent with frequency information of the previous-hop station microwave communication equipment, regulates an antenna angle of the station microwave communication equipment to be matched with an antenna angle of the previous-hop station microwave communication equipment through the automatic antenna regulation function, and establishes an air interface communication connection with the previous-hop station microwave communication equipment.

In an optional embodiment of the disclosure, the operation that said certain piece of station microwave communication equipment on the downstream acquires the configuration information from the previous-hop station microwave communication equipment and completes station activation may include that:
the station microwave communication equipment sends a configuration acquisition request to the previous-hop station microwave communication equipment; and
after the configuration information fed back by the previous-hop station microwave communication equipment according to the configuration acquisition request is received, the station microwave communication equipment extracts configuration data of the station microwave communication equipment from the received configuration information, and performs configuration using the extracted configuration data to complete station activation.

In an optional embodiment of the disclosure, when there is station microwave communication equipment on a downstream of the station microwave communication equipment, the configuration information acquired by the station microwave communication equipment from the previous-hop station microwave communication equipment may further include the configuration data of the station microwave communication equipment on the downstream of said piece of station microwave communication equipment.

In an optional embodiment of the disclosure, the station activation method for the microwave communication equipment may further include that: after the station microwave communication equipment receives a configuration acquisition request sent by the station microwave communication equipment on the downstream of the station microwave communication equipment, configuration information including configuration data of the station microwave communication equipment on the downstream is transmitted to the station microwave communication equipment on the downstream.

In an optional embodiment of the disclosure, the operation that station activation of the central station microwave communication equipment is completed may include that:
valid configuration information is sent to the central station microwave communication equipment through network management equipment, the valid configuration information including configuration data of the central station microwave communication equipment and the configuration data of all the station microwave communication equipment on the downstream; and
the central station microwave communication equipment extracts own configuration data from the valid configuration information, and performs configuration using the extracted configuration data to complete station activation.

The embodiments of the disclosure further provide a microwave communication system according to claim 8.

In an optional embodiment of the disclosure, the scanning module may include a frequency sweeping submodule and an antenna regulation submodule;
the frequency sweeping submodule may be configured to perform automatic frequency sweeping on the previous-hop station microwave communication equipment and configure own frequency information of the station microwave communication equipment to be consistent with frequency information of the previous-hop station microwave communication equipment; and
the antenna regulation submodule may be configured to regulate an antenna angle of the station microwave communication equipment to be matched with an antenna angle of the previous-hop station microwave communication equipment and establish an air interface communication connection with the previous-hop station microwave communication equipment.

In an optional embodiment of the disclosure, the second station activation module may be configured to:
send a configuration acquisition request to the previous-hop station microwave communication equipment; and
after the configuration information fed back by the previous-hop station microwave communication equipment according to the configuration acquisition request is received, extract configuration data of the station microwave communication equipment from the received configuration information, and perform configuration using the extracted configuration data to complete station activation.

In an optional embodiment of the disclosure, the second station activation module may further be configured to, when the configuration information is acquired from the previous-hop station microwave communication equipment, further acquire the configuration data of all the station microwave communication equipment on a downstream of the station microwave communication equipment.

In an optional embodiment of the disclosure, the station microwave communication equipment may further include an information transceiver module, configured to receive a configuration acquisition request sent by a downstream station microwave communication equipment and transmit configuration information including the configuration data of the downstream station microwave communication equipment to the downstream station microwave communication equipment, in response to the received configuration acquisition request.

In an optional embodiment of the disclosure, the first station activation module may be configured to:
acquire valid configuration information from network management equipment, the valid configuration information including configuration data of the central station microwave communication equipment and the configuration data of all the station microwave communication equipment on the downstream; and
extract own configuration data of the central station microwave communication equipment from the valid configuration information, and perform configuration using the extracted configuration data to complete station activation.

Compared with the related technology, the technical solutions provided by the embodiments of the disclosure include that: station activation of the central station microwave communication equipment is completed, and the scanning function of all the station microwave communication equipment on the downstream of the central station microwave communication equipment is enabled, the central station microwave communication equipment after station activation including the configuration data of all the station microwave communication equipment on the downstream; and the station microwave communication equipment of which the scanning function is enabled on the downstream performs automatic scanning, and when a certain piece of station microwave communication equipment on the downstream scans the previous-hop station microwave communication equipment through the enabled scanning function, the configuration information is automatically acquired from the previous-hop station microwave communication equipment of the station microwave communication equipment, and station activation is completed. According to the embodiments of the disclosure, automatic station activation between a central station and the station microwave communication equipment on the downstream is implemented, human intervention is avoided, time and resources occupied when a person in charge runs between the stations are saved, station activation efficiency is improved, station activation cost is reduced, and flexible station activation is implemented.

After the drawings and detailed descriptions are read and comprehended, other aspects may be understood.

### BRIEF DESCRIPTION OF DRAWINGS

FIG. 1 is a first flowchart of a station activation method for microwave communication equipment according to embodiment 1 of the disclosure.
FIG. 2 is a second flowchart of a station activation method for microwave communication equipment according to embodiment 1 of the disclosure.
FIG. 3 is a structure diagram of a microwave communication system according to embodiment 2 of the disclosure.
FIG. 4 is a structure diagram of a scanning module of microwave communication equipment of a station according to embodiment 2 of the disclosure.
FIG. 5 is a structure diagram of microwave communication equipment of a station according to embodiment 2 of the disclosure.
FIG. 6 is another structure diagram of a microwave communication system according to embodiment 2 of the disclosure.

### DETAILED DESCRIPTION

The embodiments of the application will be described below in combination with the drawings in detail. It is important to note that the embodiments in the application and characteristics in the embodiments may be freely combined without conflicts.

According to the disclosure, station activation of central station microwave communication equipment is completed at first, a scanning function of station microwave communication equipment on a downstream of the central station microwave communication equipment is enabled, and then the station microwave communication equipment of which the scanning function is enabled on the downstream automatically scans previous-hop station microwave communication equipment and automatically acquire configuration information to complete station activation. Human intervention is not required, time and resources occupied when a person in charge runs between stations are saved, station activation efficiency is improved, station activation cost is reduced, and a station activation implementation manner is more flexible. The disclosure will further be described below through specific implementation modes in combination with the drawings in detail.

### Embodiment 1

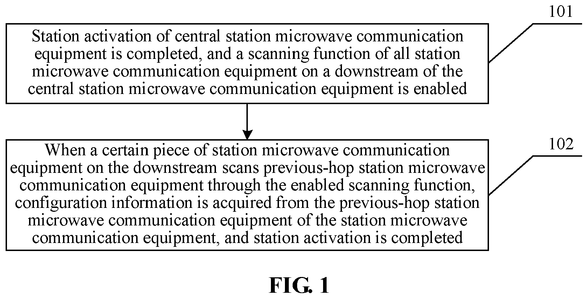

Referring to FIG. 1, a station activation method provided by the embodiment for microwave communication equipment includes the following steps.

In 101, station activation of central station microwave communication equipment is completed, and a scanning function of all station microwave communication equipment on a downstream of the central station microwave communication equipment is enabled.

In the embodiment, the central station microwave communication equipment may include station microwave communication equipment closest to a network manager, and is connected with the network manager. The central station microwave communication equipment after station activation includes configuration information of all the station microwave communication equipment on the downstream. In the embodiment, the configuration information of the microwave communication equipment includes, but not limited to, at least one of communication address information, station name information, time information, virtual local area network information and the like.

It is important to note that an upstream and the downstream in the embodiment of the disclosure are only relative location concepts of a network topology. Station microwave communication equipment may determine corresponding upstream station microwave communication equipment and downstream station microwave communication equipment according to the network topology and the downstream station microwave communication equipment includes corresponding station microwave communication equipment according to the network topology, which belongs to general knowledge well known to those skilled in the art. In the embodiment of the disclosure, the configuration information of the microwave communication equipment has been planned before station activation, like the whole network topology.

In 102, after first station microwave communication equipment scans previous-hop station microwave communication equipment, configuration information is acquired from the previous-hop station microwave communication equipment of the first station equipment, and station activation is completed.

In the step, the previous-hop station microwave communication equipment scanned by the first station microwave communication equipment may be the central station microwave communication equipment, and at this moment, the first station microwave communication equipment is a next-hop station of the central station microwave communication equipment; and the scanned previous-hop station may also be one of the station microwave communication equipment on the downstream of the central station, and at this moment, the first station microwave communication equipment is not the next-hop station of the central station microwave communication equipment.

The operation that station activation of the central station microwave communication equipment is completed in Step 101 includes that:
valid configuration information is sent to the central station microwave communication equipment through network management equipment, the valid configuration information including configuration data of the central station microwave communication equipment and the configuration data of all the station microwave communication equipment on the downstream of the central station microwave communication equipment; and
the central station microwave communication equipment extracts own configuration data from the valid configuration information, and performs configuration using the extracted configuration data to complete station activation.

In the embodiment, since a topological connection relationship between all the station microwave communication equipment is known by the network management equipment in advance, when station activation is performed on the central station microwave communication equipment through the network management equipment, the configuration data of the other subsequent station microwave communication equipment may be transmitted to the central station microwave communication equipment together. In such a manner, the central station microwave communication equipment may transmit the configuration data of the station microwave communication equipment on the downstream and the other station microwave communication equipment on the downstream of the station microwave communication equipment on the downstream after receiving a configuration information acquisition request sent by the station microwave communication equipment on the downstream. It should be understood that the configuration data of the station microwave communication equipment on the downstream of the central station microwave communication equipment may also be transmitted independently after station activation of the central station microwave communication equipment is completed rather than transmitted together with the configuration data of the central station microwave communication equipment.

In Step 101, the scanning function of all the station microwave communication equipment on the downstream of the central station microwave communication equipment is enabled, and during implementation, may be enabled for automatic scanning after the station microwave communication equipment is mounted and automatically disabled after the previous-hop station microwave communication equipment is scanned to acquire the configuration information to complete station activation. The scanning function enabled in the embodiment may include an automatic frequency sweeping function and an automatic antenna regulation function. Frequency information of the previous-hop station microwave communication equipment may be scanned through the automatic scanning function, an antenna angle of the local microwave communication equipment may be finely regulated to be matched with an antenna angle of the previous-hop station microwave communication equipment through the automatic antenna regulation function, a communication connection with the previous-hop station microwave communication equipment is further suggested to be established, the configuration information is acquired from the previous-hop station microwave communication equipment to complete station activation, and after station activation is completed, the scanning function may be automatically disabled. Therefore, human intervention is not required. Optionally, the operation that the station microwave communication equipment scans the previous-hop station microwave communication equipment includes that:
the station microwave communication equipment scans frequency information of the previous-hop station microwave communication equipment through the automatic frequency sweeping function, and configures own frequency information to be consistent with the previous-hop station microwave communication equipment; and the station microwave communication equipment regulates own antenna angle to be matched with an antenna angle of the previous-hop station microwave communication equipment through the automatic antenna regulation function, and further establishes an air interface communication connection with the previous-hop station microwave communication equipment. In such a manner, the related configuration information may be transmitted through the air interface communication connection. The frequency information scanned in the embodiment includes, but not limited to, frequency point and bandwidth information.

After the communication connection is established with the previous station, the operation that the station microwave communication equipment acquires the configuration information from the previous-hop station microwave communication equipment and completes station activation includes that:
the station microwave communication equipment sends a configuration acquisition request to the previous-hop station microwave communication equipment, wherein, at this moment, the microwave communication equipment of the previous station may include communication equipment for which station activation has been completed and may also include communication equipment for which station activation has yet not been completed, when activation for the previous station microwave communication equipment has been completed, the configuration information of the station microwave communication equipment and the other station microwave communication equipment on the downstream of the station microwave communication equipment is stored thereon, the configuration information may be fed back to the station microwave communication equipment, otherwise, when activation for the previous station microwave communication equipment has yet not been completed, no configuration data is stored, and at this moment, no information may be fed back to the station microwave communication equipment, and of course, an acquisition failure response may also be fed back; and
when the configuration information fed back by the previous-hop station microwave communication equipment according to the configuration acquisition request is received, the station microwave communication equipment extracts own configuration data therefrom, and performs configuration using the extracted configuration data to complete station activation, and if no response is received from the previous-hop station microwave communication equipment or a received response is the acquisition failure response, automatic frequency sweeping and automatic antenna regulation are continued.

Thus it can be seen that a handshake manner is adopted to complete interaction about the configuration data between the previous-hop and next-hop stations in the embodiment, a station for which effective configuration is not completed is required to keep performing automatic scanning, a station for which effective configuration has been completed may automatically stop automatic scanning, a configuration process requires no human intervention, station activation efficiency and intelligence may be improved, and station activation cost may be reduced.

In the embodiment, when there is still station microwave communication equipment on a downstream of the station microwave communication equipment for which station activation has been completed, it can be known from the abovementioned analysis that the configuration information acquired from the previous-hop station microwave communication equipment during station activation further includes the configuration data of all the station microwave communication equipment on the downstream. After its next-hop station microwave communication equipment scans it and establishes a connection with it, it may receive a configuration acquisition request sent by the next-hop station microwave communication equipment and then transmit the configuration information at least including the configuration data of the next-hop station microwave communication equipment to the next-hop station microwave communication equipment. When there is still a downstream station of the next-hop station microwave communication equipment, the configuration information further includes the configuration data of the downstream station. Thus it can be seen that automatic station activation of the station microwave communication equipment on the downstream of the central station microwave communication equipment in the embodiment "radiates" outwards through the central station, the configuration data may be automatically sent outwards layer by layer from the central station, station activation configuration may be simultaneously performed on multiple stations, and time and resources consumed in running between the stations are saved.

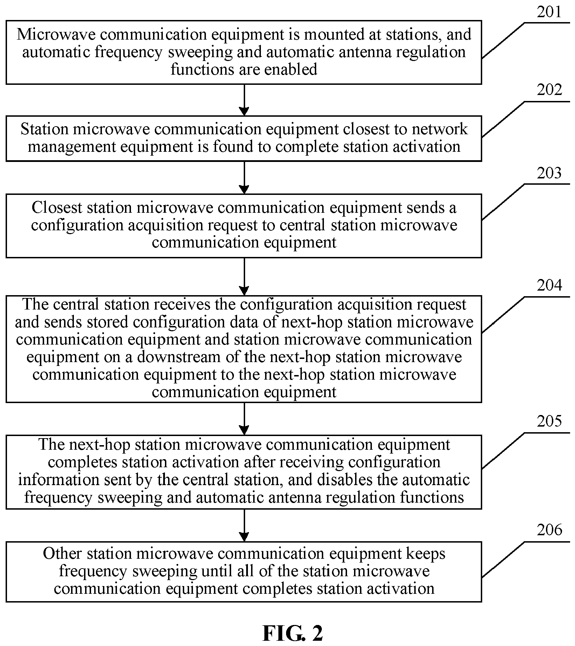

The abovementioned process will be described below with a complete example, and referring to FIG. 2, includes the following steps.

In 201, microwave communication equipment is mounted at stations, and automatic frequency sweeping and automatic antenna regulation functions are enabled, wherein a stepped frequency adopted for frequency sweeping may be flexibly set according to a practical application scenario, and a stepped regulation direction and angle for automatic antenna regulation may also be preset according to the practical application scenario.

It is important to note that implementation of frequency sweeping and automatic antenna regulation belongs to technical means frequently used by those skilled in the art, implementation manners for enabling and disabling also belong to technical means frequently used by those skilled in the art, and no more elaborations will be made herein.

In 202, station microwave communication equipment closest to network management equipment (called as central station microwave communication equipment) is found to complete station activation.

An effective configuration package (the effective configuration package includes initial configuration data of the central station microwave communication equipment (called as the central station for short) and configuration data of all of its downstream stations) is transmitted through the network management equipment, and the central station microwave communication equipment completes configuration, stops automatic frequency sweeping (of course, the central station may also be found in advance but its frequency sweeping function is not enabled in Step 201), and has a capability of correctly responding to a configuration acquisition request.

In 203, closest station microwave communication equipment sends a configuration acquisition request to the central station microwave communication equipment, that is, the station microwave communication equipment (called as a next-hop station) closest to the central station microwave communication equipment detects a frequency point and bandwidth of the central station by continuous frequency sweeping, implements air interface communication through the automatic antenna regulation function, further establishes a communication connection with the central station microwave communication equipment, sends the configuration acquisition request to the central station microwave communication equipment and waits for a response.

In 204, the central station receives the configuration acquisition request and sends stored configuration data of the next-hop station microwave communication equipment and station microwave communication equipment on a downstream of the next-hop station microwave communication equipment to the next-hop station microwave communication equipment.

In 205, the next-hop station microwave communication equipment completes station activation after receiving configuration information sent by the central station, and disables the automatic frequency sweeping and automatic antenna regulation functions. In the embodiment of the disclosure, the station microwave communication equipment on the downstream of the central station also has a capability of correctly responding to a configuration acquisition request, like the central station.

In 206, other station microwave communication equipment keeps frequency sweeping until all of the station microwave communication equipment completes station activation.

The embodiment of the disclosure further provides a computer storage medium, in which a computer-executable instruction is stored, the computer-executable instruction being configured to execute the station activation method for the microwave communication equipment.

### Embodiment 2

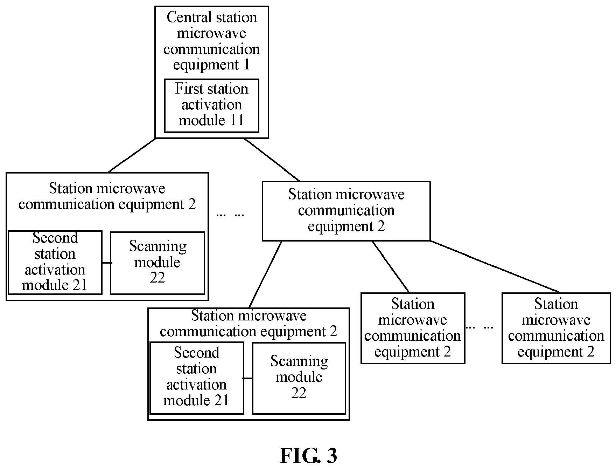

The embodiment provides a microwave communication system, which, referring to FIG. 3, includes central station microwave communication equipment 1 and all station microwave communication equipment 2 on a downstream, wherein the central station microwave communication equipment 1 includes a first station activation module 11, and each piece of station microwave communication equipment on the downstream includes a second station activation module 21 and a scanning module 22;
the first station activation module 11 is configured to complete station activation of the central station microwave communication equipment, the central station microwave communication equipment after station activation including configuration data of all the station microwave communication equipment 2 on the downstream;
the scanning module 22 is configured to, when previous-hop station microwave communication equipment is scanned, trigger the second station activation module to operate; and
the second station activation module 21 is configured to, when the scanning module scans the previous-hop station microwave communication equipment, acquire configuration information from the previous-hop station microwave communication equipment and complete station activation, wherein the scanned previous-hop station microwave communication equipment may also be one of the station microwave communication equipment on the downstream of a central station, and at this moment, the station microwave communication equipment is not a next-hop station of the central station microwave communication equipment; and the scanned previous-hop station microwave communication equipment may be the central station microwave communication equipment, and at this moment, the station microwave communication equipment is the next-hop station of the central station microwave communication equipment.

The first station activation module 11 is configured to:
acquire valid configuration information from network management equipment, the valid configuration information including configuration data of the central station microwave communication equipment and the configuration data of all the station microwave communication equipment 2 on the downstream; and
extract own configuration data of the central station microwave communication equipment 1 from the valid configuration information, and perform configuration using the extracted configuration data to complete station activation.

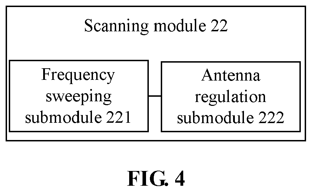

Referring to FIG. 4, in the embodiment, the scanning module 22 of the station microwave communication equipment 2 includes a frequency sweeping submodule 221 and an antenna regulation submodule 222; the frequency sweeping submodule 221 is configured to perform automatic frequency sweeping on the previous-hop station microwave communication equipment and configure own frequency information of the station microwave communication equipment to be consistent with the previous-hop station microwave communication equipment, a stepped frequency adopted for frequency sweeping being flexibly set according to an application scenario; and the antenna regulation submodule 222 is configured to regulate own antenna angle of the station microwave communication equipment to be matched with an antenna angle of the previous-hop station microwave communication equipment and establish an air interface communication connection with the previous-hop station microwave communication equipment, a stepped regulation direction and angle for automatic antenna regulation being also preset according to the practical application scenario. In such a manner, the related configuration information may be transmitted through the air interface communication connection. The frequency information scanned in the embodiment includes, but not limited to, frequency point and bandwidth information.

After the station microwave communication equipment 2 establishes the communication connection with a previous station, the second station activation module 21 of the station microwave communication equipment 2 is configured to:
send a configuration acquisition request to the previous-hop station microwave communication equipment; and
after the configuration information fed back by the previous-hop station microwave communication equipment according to the configuration acquisition request is received, extract own configuration data of the station microwave communication equipment from the configuration information, and perform configuration using the extracted configuration data to complete station activation.

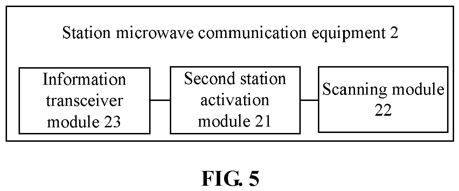

The second station activation module 22 is further configured to, when the configuration information is acquired from the previous-hop station microwave communication equipment, further acquire the configuration data of all the station microwave communication equipment on a downstream of the station microwave communication equipment 2. At this moment, referring to FIG. 5, the station microwave communication equipment 2 may further include an information transceiver module 23, configured to receive a configuration acquisition request sent by the station microwave communication equipment on the downstream and transmit the configuration information including the configuration data of the station microwave communication equipment on the downstream to the station microwave communication equipment on the downstream according to the received configuration acquisition request. When there is still downstream station of the next-hop station microwave communication equipment, the configuration information further includes the configuration data of the downstream station. Automatic station activation of the station microwave communication equipment on the downstream of the central station microwave communication equipment in the embodiment "radiates" outwards through the central station, the configuration data may be automatically sent outwards layer by layer from the central station, station activation configuration may be simultaneously performed on multiple stations, and time and resources consumed in running between the stations are saved. The solution of the disclosure will further be described below with a specific application example.

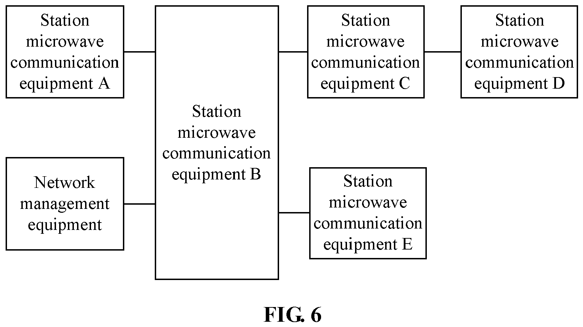

There is made such a hypothesis that a distribution of microwave communication equipment is shown in FIG. 6. The microwave communication system consists of station microwave communication equipment A, B, C, D and E, and the station microwave communication equipment B is closest to network management equipment, and is central station microwave communication equipment. A station activation process of the communication system is as follows.

At first, after erection of the station microwave communication equipment is completed, at least a scanning function and automatic antenna regulation function of the station microwave communication equipment A, C, D and E are enabled, an effective configuration is transmitted to the central station microwave communication equipment B to complete station activation of the central station microwave communication equipment B through the network management equipment, and at this moment, the central station microwave communication equipment B has configuration data of all of its downstream station microwave communication equipment A, C, D and E.

Station microwave communication equipment A, C and E of a layer closest to the central station microwave communication equipment B scans the previous-hop central station microwave communication equipment B through a frequency sweeping function, implements fine regulation of antenna angles through the automatic antenna regulation function, establishes communication connections with the central station microwave communication equipment B and sends configuration acquisition requests to the central station microwave communication equipment B to acquire configuration information, wherein the configuration information acquired by the station microwave communication equipment C further includes the configuration data of the station microwave communication equipment D.

The station microwave communication equipment A, C and E completes configuration for station activation after acquiring respective configuration data from the central station microwave communication equipment B.

The station microwave communication equipment B scans the previous-hop station microwave communication equipment C through the frequency sweeping function, implements fine regulation of an antenna angle through the automatic antenna regulation function, establishes a communication connection with the station microwave communication equipment C, then sends a configuration acquisition request to the station microwave communication equipment C to acquire configuration information, and completes station activation according to the configuration data in the configuration information.

Compared with an existing station activation process, the abovementioned station activation process has the advantages that the downstream stations of the central station may establish communications with the previous-hop stations through automatic frequency sweeping and antenna regulation and acquire the configuration information to complete station activation, so that human intervention is greatly reduced, station activation efficiency and intelligence are improved, and station activation cost is reduced.

Those of ordinary skilled in the art should know that all or part of the steps of the abovementioned method may be completed by instructing related hardware (for example, a processor) through a program, the program may be stored in a computer-readable storage medium, for example, a read-only memory, a magnetic disk or an optical disk. Optionally, all or part of the steps of the embodiment may also be implemented by virtue of one or more integrated circuits. Correspondingly, each module/unit in the embodiments may be implemented in form of hardware, for example, a corresponding function is realized through an integrated circuit, and may also be implemented in form of software function module, for example, the corresponding function is realized by executing, by the processor, a program/instruction stored in a memory. The disclosure is not limited to a hardware and software combination in any specific form.

Although the implementation modes disclosed by the application are mentioned above, the contents are only implementation modes adopted for facilitating understanding of the application and not intended to limit the application, for example, a specific implementation method in the implementation modes of the disclosure. Those skilled in the art of the application may make various modifications and variations to implementation forms and details without departing from the scope defined by the appended claims.

## Claims

1. A station activation method for microwave communication equipment, **characterized in that**, the method comprises:
completing station activation of central station microwave communication equipment, and enabling a scanning function of all station microwave communication equipment on a downstream of the central station microwave communication equipment (101), the central station microwave communication equipment after station activation comprising configuration data of all of the station microwave communication equipment on the downstream; and
the station microwave communication equipments on the downstream scanning previous-hop station microwave communication equipment through the enabled scanning function, when each station microwave communication equipment on the downstream scans the respective previous-hop station microwave communication equipment through the enabled scanning function, acquiring configuration information from the respective scanned previous-hop station microwave communication equipment of the station microwave communication equipment, and completing station activation of said station microwave communication equipment acquiring configuration information (102), the respective previous-hop station microwave communication equipment being the central station microwave communication equipment or one of the station microwave communication equipments on the downstream of the central station microwave communication equipment,
wherein the method further comprises: before completing station activation of the central station microwave communication equipment,
sending valid configuration information to the central station microwave communication equipment through network management equipment, the valid configuration information comprising configuration data of the central station microwave communication equipment and the configuration data of all the station microwave communication equipment on the downstream.

2. The station activation method for the microwave communication equipment according to claim 1, wherein the scanning function comprises an automatic frequency sweeping function and an automatic antenna regulation function.

3. The station activation method for microwave communication equipment according to claim 2, wherein scanning, by said certain piece of station microwave communication equipment on the downstream, the previous-hop station microwave communication equipment comprises:
scanning, by the station microwave communication equipment, frequency information of the previous-hop station microwave communication equipment through the automatic frequency sweeping function, configuring frequency information of the station microwave communication equipment to be consistent with frequency information of the previous-hop station microwave communication equipment, regulating an antenna angle of the station microwave communication equipment to be matched with an antenna angle of the previous-hop station microwave communication equipment through the automatic antenna regulation function, and establishing an air interface communication connection with the previous-hop station microwave communication equipment.

4. The station activation method for microwave communication equipment according to claim 3, wherein acquiring, by said certain piece of station microwave communication equipment on the downstream, the configuration information from the previous-hop station microwave communication equipment and completing station activation comprises:
sending, by the station microwave communication equipment, a configuration acquisition request to the previous-hop station microwave communication equipment; and
after the configuration information fed back by the previous-hop station microwave communication equipment according to the configuration acquisition request is received, extracting, by the station microwave communication equipment, configuration data of the station microwave communication equipment from the received configuration information, and performing configuration using the extracted configuration data to complete station activation.

5. The station activation method for microwave communication equipment according to claim 4, wherein, when there is station microwave communication equipment on a downstream of the station microwave communication equipment, the configuration information acquired by the station microwave communication equipment from the previous-hop station microwave communication equipment further comprises configuration data of the station microwave communication equipment on the downstream of said certain piece of station microwave communication equipment.

6. The station activation method for microwave communication equipment according to claim 5, further comprising: after the station microwave communication equipment receives a configuration acquisition request sent by the station microwave communication equipment on the downstream of the station microwave communication equipment, transmitting configuration information comprising configuration data of the station microwave communication equipment on the downstream to the station microwave communication equipment on the downstream.

7. The station activation method for microwave communication equipment according to any one of claims 1-6, wherein completing station activation of the central station microwave communication equipment comprises:
extracting, by the central station microwave communication equipment, configuration data of the central station microwave communication equipment from the valid configuration information, and performing configuration using the extracted configuration data to complete station activation.

8. A microwave communication system, comprising central station microwave communication equipment (1) and all of station microwave communication equipment (2) on a downstream of the central station microwave communication equipment (1), wherein the central station microwave communication equipment (1) comprises a first station activation module (11), and each piece of station microwave communication equipment (2) on the downstream comprises a second station activation module (21) and a scanning module (22),
**characterized in that**,
the first station activation module (11) is configured to complete station activation of the central station microwave communication equipment, the central station microwave communication equipment after station activation comprising configuration data of all of the station microwave communication equipment on the downstream;
the scanning module (22) is configured to scan respective previous-hop station microwave communication equipment and, when the respective previous-hop station microwave communication equipment is scanned, trigger the second station activation module to operate; and
the second station activation module (21) is configured to, when the scanning module scans the respective previous-hop station microwave communication equipment, acquire configuration information from the respective scanned previous-hop station microwave communication equipment and complete station activation of the piece of station microwave communication equipment where the second station activation module is comprised, the respective previous-hop station microwave communication equipment being the central station microwave communication equipment or one of the station microwave communication equipment on the downstream of the central station microwave communication equipment,
wherein the first station activation module (11) is configured to:
acquire valid configuration information from network management equipment, the valid configuration information comprising configuration data of the central station microwave communication equipment and the configuration data of all the station microwave communication equipment on the downstream.

9. The microwave communication system according to claim 8, wherein the scanning module (22) comprises a frequency sweeping submodule and an antenna regulation submodule;
the frequency sweeping submodule (221) is configured to perform automatic frequency sweeping on the previous-hop station microwave communication equipment and configure frequency information of the station microwave communication equipment to be consistent with frequency information of the previous-hop station microwave communication equipment; and
the antenna regulation submodule (222) is configured to regulate an antenna angle of the station microwave communication equipment to be matched with an antenna angle of the previous-hop station microwave communication equipment and establish an air interface communication connection with the previous-hop station microwave communication equipment.

10. The microwave communication system according to claim 9, wherein the second station activation module (21) is configured to:
send a configuration acquisition request to the previous-hop station microwave communication equipment; and
after the configuration information fed back by the previous-hop station microwave communication equipment according to the configuration acquisition request is received, extract configuration data of the station microwave communication equipment from the received configuration information, and perform configuration using the extracted configuration data to complete station activation.

11. The microwave communication system according to claim 10, wherein the second station activation module (21) is further configured to, when the configuration information is acquired from the previous-hop station microwave communication equipment, further acquire the configuration data of all the station microwave communication equipment on a downstream of the station microwave communication equipment.

12. The microwave communication system according to claim 11, wherein the station microwave communication equipment (2) further comprises an information transceiver module (23), configured to receive a configuration acquisition request sent by a downstream station microwave communication equipment and transmit configuration information comprising configuration data of the downstream station microwave communication equipment to the downstream station microwave communication equipment, in response to the received configuration acquisition request.

13. The microwave communication system according to any one of claims 8-12, wherein the first station activation module (11) is configured to:
extract configuration data of the central station microwave communication equipment from the valid configuration information, and perform configuration using the extracted configuration data to complete station activation.

## Patentansprüche

1. Stationsaktivierungsverfahren für Mikrowellenkommunikationsausrüstungen, **dadurch gekennzeichnet, dass** das Verfahren umfasst:
Fertigstellen der Stationsaktivierung von Zentralstations-Mikrowellenkommunikationsausrüstungen und Ermöglichen einer Scanfunktion aller Stationsmikrowellenkommunikationsausrüstungen stromab der Zentralstations-Mikrowellenkommunikationsausrüstungen (101), wobei die Zentralstations-Mikrowellenkommunikationsausrüstungen nach der Stationsaktivierung Konfigurationsdaten aller Stationsmikrowellenkommunikationsausrüstungen stromabwärts umfassen; und
Scannen, durch die Stationsmikrowellenkommunikationsausrüstungen stromabwärts, von Stationsmikrowellenkommunikationsausrüstungen eines vorherigen Hops mittels der ermöglichten Scanfunktion dann, wenn jede Stationsmikrowellenkommunikationsausrüstung stromabwärts die jeweilige Stationsmikrowellenkommunikationsausrüstung des vorherigen Hops mittels der ermöglichten Scanfunktion scannt, Erfassen von Konfigurationsinformationen aus der jeweiligen gescannten Stationsmikrowellenkommunikationsausrüstung des vorherigen Hops der Stationsmikrowellenkommunikationsausrüstungen, und Fertigstellen der Stationsaktivierung der gesagten Stationsmikrowellenkommunikationsausrüstungen, die Konfigurationsinformationen erfassen (102), wobei die jeweilige Stationsmikrowellenkommunikationsausrüstung des vorherigen Hops die Zentralstations-Mikrowellenkommunikationsausrüstung oder eine der Stationsmikrowellenkommunikationsausrüstungen stromab der Zentralstations-Mikrowellenkommunikationsausrüstungen ist,
worin das Verfahren ferner umfasst: vor dem Fertigstellen der Stationsaktivierung der Zentralstations-Mikrowellenkommunikationsausrüstungen,
Senden von gültigen Konfigurationsinformationen an die Zentralstations-Mikrowellenkommunikationsausrüstungen mittels Netzverwaltungsausrüstungen, wobei die gültigen Konfigurationsinformationen Konfigurationsdaten der Zentralstations-Mikrowellenkommunikationsausrüstungen und die Konfigurationsdaten aller Stationsmikrowellenkommunikationsausrüstungen stromabwärts umfassen.

2. Stationsaktivierungsverfahren für die Mikrowellenkommunikationsausrüstungen nach Anspruch 1, worin die Scanfunktion eine automatische Frequenzabtastfunktion und eine automatische Antenneneinstellungsfunktion umfasst.

3. Stationsaktivierungsverfahren für Mikrowellenkommunikationsausrüstungen nach Anspruch 2, worin das Scannen, durch die gesagte bestimmte Stationsmikrowellenkommunikationsausrüstung stromabwärts, der Stationsmikrowellenkommunikationsausrüstung des vorherigen Hops umfasst:
Scannen, durch die Stationsmikrowellenkommunikationsausrüstung, von Frequenzinformationen der Stationsmikrowellenkommunikationsausrüstung des vorherigen Hops mittels der automatischen Frequenzabtastfunktion, Konfigurieren von Frequenzinformationen der Stationsmikrowellenkommunikationsausrüstung, damit diese mit Frequenzinformationen der Stationsmikrowellenkommunikationsausrüstung des vorherigen Hops übereinstimmen, Einstellen eines Antennenwinkels der Stationsmikrowellenkommunikationsausrüstung, damit dieser zu einem Antennenwinkel der Stationsmikrowellenkommunikationsausrüstung des vorherigen Hops mittels der automatischen Antenneneinstellungsfunktion passt, und Herstellen einer Luftschnittstellen-Kommunikationsverbindung mit der Stationsmikrowellenkommunikationsausrüstung des vorherigen Hops.

4. Stationsaktivierungsverfahren für Mikrowellenkommunikationsausrüstungen nach Anspruch 3, worin das Erfassen, durch die gesagte bestimmte Stationsmikrowellenkommunikationsausrüstung stromabwärts, von Konfigurationsinformationen aus der Stationsmikrowellenkommunikationsausrüstung des vorherigen Hops, und das Fertigstellen der Stationsaktivierung umfasst:
Senden, durch die Stationsmikrowellenkommunikationsausrüstung, einer Konfigurationserfassungsanforderung an die Stationsmikrowellenkommunikationsausrüstung des vorherigen Hops; und
nachdem die Konfigurationsinformationen, die von der Stationsmikrowellenkommunikationsausrüstung des vorherigen Hops gemäß der Konfigurationserfassungsanforderung rückgemeldet werden, erhalten worden sind, Extrahieren, durch die Stationsmikrowellenkommunikationsausrüstung, von Konfigurationsdaten der Stationsmikrowellenkommunikationsausrüstung aus den erhaltenen Konfigurationsinformationen, und Durchführen der Konfiguration unter Verwendung der extrahierten Konfigurationsdaten, um die Stationsaktivierung fertigzustellen.

5. Stationsaktivierungsverfahren für Mikrowellenkommunikationsausrüstungen nach Anspruch 4, worin, wenn es eine Stationsmikrowellenkommunikationsausrüstung stromabwärts der Stationsmikrowellenkommunikationsausrüstung gibt, die Konfigurationsinformationen, die durch die Stationsmikrowellenkommunikationsausrüstung aus der Stationsmikrowellenkommunikationsausrüstung des vorherigen Hops erfasst werden, ferner Konfigurationsdaten der Stationsmikrowellenkommunikationsausrüstung stromabwärts der gesagten bestimmten Stationsmikrowellenkommunikationsausrüstung umfassen.

6. Stationsaktivierungsverfahren für Mikrowellenkommunikationsausrüstungen nach Anspruch 5, ferner umfassend: nachdem die Stationsmikrowellenkommunikationsausrüstungen eine Konfigurationserfassungsanforderung erhalten, die von der Stationsmikrowellenkommunikationsausrüstung stromabwärts der Stationsmikrowellenkommunikationsausrüstung gesandt wird, Übertragen von Konfigurationsinformationen, die Konfigurationsdaten der Stationsmikrowellenkommunikationsausrüstung stromabwärts an die Stationsmikrowellenkommunikationsausrüstung stromabwärts umfassen.

7. Stationsaktivierungsverfahren für Mikrowellenkommunikationsausrüstungen nach einem der Ansprüche 1-6, worin das Fertigstellen der Stationsaktivierung der Zentralstations-Mikrowellenkommunikationsausrüstungen umfasst:
Extrahieren, durch die Zentralstations-Mikrowellenkommunikationsausrüstungen, von Konfigurationsdaten der Zentralstations-Mikrowellenkommunikationsausrüstungen aus den gültigen Konfigurationsinformationen, und Durchführen der Konfiguration unter Verwendung der extrahierten Konfigurationsdaten, um die Stationsaktivierung fertigzustellen.

8. Mikrowellenkommunikationssystem, umfassend Zentralstations-Mikrowellenkommunikationsausrüstungen (1) und alle Stationsmikrowellenkommunikationsausrüstungen (2) stromab der Zentralstations-Mikrowellenkommunikationsausrüstungen (1), worin die Zentralstations-Mikrowellenkommunikationsausrüstungen (1) ein erstes Stationsaktivierungsmodul (11) umfassen, und jede Stationsmikrowellenkommunikationsausrüstung (2) stromabwärts ein zweites Stationsaktivierungsmodul (21) und ein Scanmodul (22) umfasst,
**dadurch gekennzeichnet, dass**
das erste Stationsaktivierungsmodul (11) dafür eingerichtet ist, um die Stationsaktivierung der Zentralstations-Mikrowellenkommunikationsausrüstungen fertigzustellen, wobei die Zentralstations-Mikrowellenkommunikationsausrüstungen nach der Stationsaktivierung Konfigurationsdaten aller Stationsmikrowellenkommunikationsausrüstungen stromabwärts umfassen;
das Scanmodul (22) dafür eingerichtet ist, um jeweilige Stationsmikrowellenkommunikationsausrüstungen eines vorherigen Hops zu scannen, und, wenn die jeweilige Stationsmikrowellenkommunikationsausrüstung des vorherigen Hops gescannt ist, um das zweite Stationsaktivierungsmodul auszulösen, damit es arbeitet; und
das zweite Stationsaktivierungsmodul (21) dafür eingerichtet ist, um, wenn das Scanmodul die jeweilige Stationsmikrowellenkommunikationsausrüstung des vorherigen Hops scannt, Konfigurationsinformationen aus der jeweiligen gescannten Stationsmikrowellenkommunikationsausrüstung des vorherigen Hops zu erfassen und die Stationsaktivierung der Stationsmikrowellenkommunikationsausrüstung, in der das zweite Stationsaktivierungsmodul umfasst ist, fertigzustellen, wobei die jeweilige Stationsmikrowellenkommunikationsausrüstung des vorherigen Hops die Zentralstations-Mikrowellenkommunikationsausrüstung oder eine der Stationsmikrowellenkommunikationsausrüstungen stromab der Zentralstations-Mikrowellenkommunikationsausrüstungen ist,
worin das erste Stationsaktivierungsmodul (11) dafür eingerichtet ist, um:
gültige Konfigurationsinformationen aus Netzverwaltungsausrüstungen zu erfassen, wobei die gültigen Konfigurationsinformationen die Konfigurationsdaten der Zentralstations-Mikrowellenkommunikationsausrüstungen und die Konfigurationsdaten aller Stationsmikrowellenkommunikationsausrüstungen stromabwärts umfassen.

9. Mikrowellenkommunikationssystem nach Anspruch 8, worin das Scanmodul (22) ein Frequenzabtastuntermodul und ein Antenneneinstellungsuntermodul umfasst;
das Frequenzabtastuntermodul (221) dafür eingerichtet ist, um automatisches Frequenzabtasten an den Stationsmikrowellenkommunikationsausrüstungen des vorherigen Hops durchzuführen, und um Frequenzinformationen der Stationsmikrowellenkommunikationsausrüstungen derart zu konfigurieren, damit diese mit Frequenzinformationen der Stationsmikrowellenkommunikationsausrüstung des vorherigen Hops übereinstimmen; und
das Antenneneinstellungsuntermodul (222) dafür eingerichtet ist, um einen Antennenwinkel der Stationsmikrowellenkommunikationsausrüstung derart einzustellen, damit dieser zu einem Antennenwinkel der Stationsmikrowellenkommunikationsausrüstung des vorherigen Hops passt, und eine Luftschnittstellen-Kommunikationsverbindung mit der Stationsmikrowellenkommunikationsausrüstung des vorherigen Hops herzustellen.

10. Mikrowellenkommunikationssystem nach Anspruch 9, worin das zweite Stationsaktivierungsmodul (21) dafür eingerichtet ist, um:
eine Konfigurationserfassungsanforderung an die Stationsmikrowellenkommunikationsausrüstung des vorherigen Hops zu senden; und
nachdem die Konfigurationsinformationen, die von der Stationsmikrowellenkommunikationsausrüstung des vorherigen Hops gemäß der Konfigurationserfassungsanforderung rückgemeldet werden, erhalten worden sind, Konfigurationsdaten der Stationsmikrowellenkommunikationsausrüstung aus den erhaltenen Konfigurationsinformationen zu extrahieren, und die Konfiguration unter Verwendung der extrahierten Konfigurationsdaten durchzuführen, um die Stationsaktivierung fertigzustellen.

11. Mikrowellenkommunikationssystem nach Anspruch 10, worin das zweite Stationsaktivierungsmodul (21) ferner dafür eingerichtet ist, um, wenn die Konfigurationsinformationen aus der Stationsmikrowellenkommunikationsausrüstung des vorherigen Hops erfasst worden sind, ferner die Konfigurationsdaten aller Stationsmikrowellenkommunikationsausrüstungen stromabwärts der Stationsmikrowellenkommunikationsausrüstungen zu erfassen.

12. Mikrowellenkommunikationssystem nach Anspruch 11, worin die Stationsmikrowellenkommunikationsausrüstungen (2) ferner ein Informations-Sendeempfangsmodul (23) umfassen, das dafür eingerichtet ist, um eine Konfigurationserfassungsanforderung zu erhalten, die von einer stromabwärts gelegenen Stationsmikrowellenkommunikationsausrüstung gesandt worden ist, und um Konfigurationsinformationen, die Konfigurationsdaten der stromabwärts gelegenen Stationsmikrowellenkommunikationsausrüstung umfassen, an die stromabwärts gelegene Stationsmikrowellenkommunikationsausrüstung in Erwiderung auf die erhaltene Konfigurationserfassungsanforderung zu übertragen.

13. Mikrowellenkommunikationssystem nach einem der Ansprüche 8-12, worin das erste Stationsaktivierungsmodul (11) dafür eingerichtet ist, um:
Konfigurationsdaten der Zentralstations-Mikrowellenkommunikationsausrüstungen aus den gültigen Konfigurationsinformationen zu extrahieren, und die Konfiguration unter Verwendung der extrahierten Konfigurationsdaten durchzuführen, um die Stationsaktivierung fertigzustellen.

## Revendications

1. Méthode d'activation d'une station pour équipement de communication par micro-ondes, **caractérisée en ce que** la méthode comprend :
l'achèvement de l'activation de la station d'un équipement de communication par micro-ondes d'une station centrale et l'activation d'une fonction de balayage de tous les équipements de communication par micro-ondes d'une station situés en aval de l'équipement de communication par micro-ondes (101) d'une station centrale, l'équipement de communication par micro-ondes d'une station centrale après l'activation de la station comprenant des données de configuration de tous les équipements de communication par micro-ondes de la station situés en aval ; et
le balayage par équipements de communication par micro-ondes d'une station situés en aval de l'équipement de communication par micro-ondes d'une station avec saut précédent à travers la fonction de balayage activée, lorsque chaque équipement de communication par micro-ondes d'une station situé en aval balaie le respectif équipement de communication par micro-ondes d'une station avec saut précédent à travers la fonction de balayage activée, l'acquisition des informations de configuration à partir du respectif équipement de communication par micro-ondes d'une station avec saut précédent balayé de l'équipement de communication par micro-ondes d'une station, et l'achèvement de l'activation de la station dudit équipement de communication par micro-ondes d'une station acquérant des informations de configuration (102), le respectif équipement de communication par micro-ondes d'une station avec saut précédent étant l'équipement de communication par micro-ondes d'une station centrale ou un des équipements de communication par micro-ondes d'une station en aval de l'équipement de communication par micro-ondes d'une station centrale,
où la méthode comprend en outre : avant l'achèvement de l'activation de la station de l'équipement de communication par micro-ondes d'une station centrale,
l'envoi d'informations de configuration valides à l'équipement de communication par micro-ondes d'une station centrale par l'intermédiaire d'un équipement de gestion de réseau, les informations de configuration valides comprenant des données de configuration de l'équipement de communication par micro-ondes d'une station centrale et les données de configuration de tous les équipements de communication par micro-ondes d'une station situés en aval.

2. Méthode d'activation d'une station pour l'équipement de communication par micro-ondes selon la revendication 1, où la fonction de balayage comprend une fonction de nettoyage automatique de fréquence et une fonction d'ajustement automatique d'antenne.

3. Méthode d'activation d'une station pour un équipement de communication par micro-ondes selon la revendication 2, où le balayage, par une partie d'équipements de communication par micro-ondes d'une station situés en aval, de l'équipement de communication par micro-ondes d'une station avec saut précédent comprend :
le balayage, par l'équipement de communication par micro-ondes d'une station, des informations de fréquence de l'équipement de communication par micro-ondes d'une station avec saut précédent à travers la fonction de nettoyage automatique de fréquence, la configuration des informations de fréquence de l'équipement de communication par micro-ondes d'une station de manière à être cohérentes avec les informations de fréquence de l'équipement de communication par micro-ondes d'une station avec saut précédent, l'ajustement d'un angle d'antenne de l'équipement de communication par micro-ondes d'une station à associer à un angle d'antenne de l'équipement de communication par micro-ondes d'une station avec saut précédent à travers la fonction d'ajustement automatique d'antenne, et l'établissant d'une connexion de communication d'interface radio avec l'équipement de communication par micro-ondes d'une station avec saut précédent.

4. Méthode d'activation d'une station pour un équipement de communication par micro-ondes selon la revendication 3, où l'acquisition, par une partie d'équipements de communication par micro-ondes d'une station situés en aval, des information de configuration de l'équipement de communication par micro-ondes d'une station avec saut précédent et l'achèvement de l'activation d'une station comprennent :
l'envoie, par l'équipement de communication par micro-ondes d'une station, d'une requête d'acquisition d'une configuration pour l'équipement de communication par micro-ondes d'une station avec saut précédent ; et
après la réception du feedback sur le informations de configuration de l'équipement de communication par micro-ondes d'une station avec saut précédent selon la requête d'acquisition d'une configuration, l'extraction, à travers l'équipement de communication par micro-ondes d'une station, des données de configuration de l'équipement de communication par micro-ondes d'une station provenant des informations de configuration reçues et l'exécution de la configuration en utilisant les données de configuration extraites pour achever l'activation de la station.

5. Méthode d'activation d'une station pour un équipement de communication par micro-ondes selon la revendication 4, où, lorsqu'il existe un équipement de communication par micro-ondes d'une station situé en aval de l'équipement de communication par micro-ondes d'une station, les informations de configuration acquises par l'équipement de communication par micro-ondes d'une station à partir de l'équipement de communication par micro-ondes d'une station avec saut précédent comprend en outre des données de configuration de l'équipement de communication par micro-ondes d'une station situé en aval de ladite partie d'équipements de communication par micro-ondes d'une station.

6. Méthode d'activation d'une station pour un équipement de communication par micro-ondes selon la revendication 5, comprenant en outre : après que l'équipement de communication par micro-ondes d'une station a reçu une requête d'acquisition d'une configuration envoyée par l'équipement de communication par micro-ondes d'une station situé en aval de l'équipement de communication par micro-ondes d'une station, la transmission d'informations de configuration comprenant des données de configuration de l'équipement de communication par micro-ondes d'une station situé en aval par rapport à l'équipement de communication par micro-ondes d'une station situé en aval.

7. Méthode d'activation d'une station pour équipement de communication par micro-ondes selon l'une quelconque des revendications 1 à 6, où l'achèvement de l'activation d'une station de communication par micro-ondes d'une station centrale comprend :
l'extraction, par l'équipement de communication par micro-ondes d'une station centrale, des données de configuration de l'équipement de communication par micro-ondes d'une station centrale à partir des informations de configuration valides, et l'exécution de la configuration en utilisant les données de configuration extraites pour achever l'activation de la station.

8. Système de communication par micro-ondes comprenant un équipement de communication par micro-ondes (1) d'une station centrale et tous les équipement de communication par micro-ondes (2) d'une station situés en aval de l'équipement de communication par micro-ondes (1) d'une station centrale, où l'équipement de communication par micro-ondes (1) d'une station centrale comprend un premier module d'activation (11) de la station, et chaque partie de l'équipement de communication par micro-ondes (2) d'une station situé en aval comprend un deuxième module d'activation (21) d'une station et un module de balayage (22),
**caractérisé en ce que**,
le premier module d'activation (11) d'une station est configuré pour achever l'activation de la station de l'équipement de communication par micro-ondes d'une station centrale, l'équipement de communication par micro-ondes d'une station centrale après l'activation de la station comprenant des données de configuration de tous les équipements de communication par micro-ondes d'une station situés en aval ;
le module de balayage (22) est configuré pour balayer un respectif équipement de communication par micro-ondes d'une station avec saut précédent et, lorsque le respectif équipement de communication par micro-ondes d'une station avec saut précédent est balayé, déclencher le fonctionnement du deuxième module d'activation d'une station ; et
le deuxième module d'activation (21) d'une station est configuré pour, lorsque le module de balayage balaie le respectif équipement de communication par micro-ondes d'une station avec saut précédent, acquérir des informations de configuration à partir du respectif équipement de communication par micro-ondes d'une station avec saut précédent balayé et achever l'activation de la station de la partie d'équipements de communication par micro-ondes d'une station où est compris le deuxième module d'activation de la station, le respectif équipement de communication par micro-ondes d'une station avec saut précédent étant l'équipement de communication par micro-ondes d'une station centrale ou l'un des équipements de communication par micro-ondes d'une station situé en aval de l'équipement de communication par micro-ondes d'une station centrale,
où le premier module d'activation (11) d'une station est configuré pour :
acquérir des informations de configuration valides provenant de l'équipement de gestion de réseau, les informations de configuration valides comprenant des données de configuration de l'équipement de communication par micro-ondes d'une station centrale et les données de configuration de tous les équipements de communication par micro-ondes d'une station situés en aval.

9. Système de communication par micro-ondes selon la revendication 8, où le module de balayage (22) comprend un sous-module de nettoyage de fréquence et un sous-module d'ajustement d'antenne ;
le sous-module de nettoyage de fréquence (221) est configuré pour effectuer un nettoyage de fréquence automatique sur l'équipement de communication par micro-ondes d'une station avec saut précédent et configurer les informations de fréquence de l'équipement de communication par micro-ondes d'une station de manière à être cohérentes avec les informations de fréquence de l'équipement de communication par micro-ondes d'une station avec saut précédent ; et
le sous-module d'ajustement d'antenne (222) est configuré pour ajuster un angle d'antenne de l'équipement de communication par micro-ondes d'une station à associer à un angle d'antenne de l'équipement de communication par micro-ondes d'une station avec saut précédent et établir une connexion de communication d'interface radio avec l'équipement de communication par micro-ondes d'une station avec saut précédent.

10. Système de communication par micro-ondes selon la revendication 9, où le deuxième module d'activation (21) d'une station est configuré pour :
envoyer une requête d'acquisition d'une configuration pour l'équipement de communication par micro-ondes d'une station avec saut précédent ; et
après la réception du feedback sur le informations de configuration de l'équipement de communication par micro-ondes d'une station avec saut précédent selon la requête d'acquisition d'une configuration, extraire des données de configuration de l'équipement de communication par micro-ondes d'une station provenant des informations de configuration reçues et effectuer la configuration en utilisant les données de configuration extraites pour achever l'activation de la station.

11. Système de communication par micro-ondes selon la revendication 10, où le deuxième module d'activation (21) d'une station est en outre configuré pour, lorsque les informations de configuration sont acquises à partir de l'équipement de communication par micro-ondes d'une station avec saut précédent, acquérir en outre les données de configuration de tous les équipements de communication par micro-ondes d'une station situés en aval de l'équipement de communication par micro-ondes d'une station.

12. Système de communication par micro-ondes selon la revendication 11, où l'équipement de communication par micro-ondes (2) d'une station comprend en outre un module transmetteur d'informations (23), configuré pour recevoir une requête d'acquisition de configuration envoyée par un équipement de communication par micro-ondes d'une station en aval et transmettre des informations de configuration comprenant des données de configuration de l'équipement de communication par micro-ondes d'une station en aval par rapport à l'équipement de communication par micro-ondes d'une station en aval, en réponse à la requête d'acquisition d'une configuration reçue.

13. Système de communication par micro-ondes selon l'une quelconque des revendication de 8 à 12, où le premier module d'activation (11) d'une est configuré pour :
extraire des données de configuration de l'équipement de communication par micro-ondes d'une station centrale à partir des informations de configuration valides, et effectuer la configuration en utilisant les données de configuration extraites pour achever l'activation de la station.
